# FASCICULE DE BREVET EUROPEEN

(11) **EP 3 568 656 B1**
(45) Date de publication et mention de la délivrance du brevet: **12.05.2021**
(21) Numéro de dépôt: 18715787.0
(22) Date de dépôt: 22.03.2018
(51) Int. Cl.: F28F 3/02, F28F 3/06, F28F 9/02, F28D 1/03, F28D 1/053, F28F 1/12

(54) **EVAPORATEUR, NOTAMMENT POUR CIRCUIT DE CLIMATISATION DE VÉHICULE AUTOMOBILE, ET CIRCUIT DE CLIMATISATION CORRESPONDANT**
VERDAMPFER, INSBESONDERE FÜR EINEN KRAFTFAHRZEUGKLIMATISIERUNGSKREISLAUF SOWIE ZUGEHÖRIGER KLIMATISIERUNGSKREISLAUF
EVAPORATOR, NOTABLY FOR A MOTOR VEHICLE AIR CONDITIONING CIRCUIT, AND CORRESPONDING AIR CONDITIONING CIRCUIT

(30) Priorité: 23.03.2017 FR 1752411
(43) Date de publication de la demande: 20.11.2019
(73) Titulaire: Valeo Systemes Thermiques, 78322 Le Mesnil Saint-Denis Cedex (FR)
(72) Inventeur: TISON, Frédéric, 72210 La Suze Sur Sarthe (FR); MOREAU, Sylvain, 72210 La Suze Sur Sarthe (FR); BELLENFANT, Aurélie, 72210 La Suze Sur Sarthe (FR); ROBILLON, Lionel, 72210 La Suze Sur Sarthe (FR); JOVET, Bastien, 78322 Le Mesnil Saint Denis Cedex (FR)
(74) Mandataire: Bialkowski, Adam
(86) Numéro de dépôt international: PCT/FR2018/050704
(87) Numéro de publication internationale: WO 2018/172712

(56) Documents cités:
- WO-A1-2006/028296
- WO-A1-2009/022020
- FR-A1- 2 986 312

## Description

### 1 DOMAINE TECHNIQUE

L'invention concerne les évaporateurs, en particulier ceux qui sont utilisés dans les circuits de climatisation des véhicules automobiles.

### 2 ARRIERE-PLAN TECHNOLOGIQUE

On connaît les circuits de climatisation fonctionnant avec un fluide réfrigérant.

Un tel circuit comprend typiquement, dans le sens de circulation du fluide réfrigérant, un compresseur, un condenseur, un évaporateur, un détendeur et un accumulateur.

Il est également connu de prévoir un échangeur de chaleur interne dans le circuit de climatisation pour améliorer les performances de l'évaporateur. Un échangeur interne est un dispositif permettant au fluide réfrigérant d'échanger de la chaleur avec ce même fluide, mais dans un état de température et de pression différent.

Le fluide réfrigérant à haute pression, provenant du compresseur, est condensé dans le condenseur et passe ensuite dans une première partie de l'échangeur interne. Puis, le fluide réfrigérant est détendu par le détendeur. Le fluide réfrigérant à basse pression quittant le détendeur passe ensuite au travers de l'évaporateur, pour y être évaporé, puis au travers de l'accumulateur, et dans une seconde partie de l'échangeur de chaleur interne, avant de retourner au compresseur.

Dans l'échangeur interne, le fluide chaud à haute pression échange de la chaleur avec le fluide froid et à basse pression. Autrement dit, l'échangeur interne assure un échange de chaleur du fluide réfrigérant en deux points différents du circuit de climatisation.

L'évaporateur permet de produire un flux d'air froid, ou climatisé, pouvant être envoyé, par exemple, dans l'habitacle d'un véhicule automobile.

Classiquement, les évaporateurs comprennent, d'une part, un cœur généralement constitué de deux nappes de conduites parallèles pour la circulation de fluide réfrigérant et, d'autre part, des moyens de répartition du fluide réfrigérant disposés aux deux extrémités de ces nappes pour assurer la distribution et la collecte du fluide réfrigérant dans les différentes conduites de chacune des nappes.

Selon la terminologie du domaine, on entend par « nappe » un circuit de fluide réfrigérant se situant dans un même plan orthogonal à l'écoulement d'air devant être réfrigéré. Les nappes sont classiquement constituées de conduites parallèles pour la circulation du fluide réfrigérant.

Selon une solution connue, les conduites sont réalisées à partir de paires de plaques accolées formant un tube.

Les paires de plaques ou tubes peuvent être disposées en alternance avec des perturbateurs intercalaires à travers lesquels peut circuler un flux d'air.

Selon une autre solution connue, les conduites sont réalisées à partir de tubulures, ou de tubes multi canaux.

Dans le cas des évaporateurs à plaques, les conduites sont réparties entre différentes zones qui forment chacune une passe de circulation du fluide réfrigérant. En d'autres termes, plusieurs conduites définissent une passe.

Dans le cas des évaporateurs à tubes, ce sont des cloisons internes prévues dans les boîtes collectrices qui définissent ces passes.

Les moyens de répartition (configuration des plaques ou cloisonnement interne des boîtes collectrices) sont donc conçus pour permettre une circulation du fluide réfrigérant en plusieurs passes, avec inversion du sens de circulation du fluide réfrigérant d'une passe à la suivante.

Classiquement, chacune des deux nappes de ces évaporateurs présente trois ou quatre passes.

Un flux d'air traverse les intervalles entre les conduites de fluide réfrigérant, et cède de la chaleur au fluide réfrigérant qui passe de l'état liquide à l'état gazeux.

Le flux d'air ainsi refroidi peut notamment être utilisé ensuite pour la climatisation de l'habitacle d'un véhicule automobile.

Des évaporateurs à deux nappes avec plusieurs trajets de fluide différents, de manière à définir dans des parties de chaque nappe, et/ou d'une nappe à l'autre, un cheminement du fluide suivant des circuits en « U » et/ou avec des flux croisés (c'est-à-dire en sens opposés), sont bien connus de l'homme du métier et largement décrits dans l'art antérieur.

Le fonctionnement de ces évaporateurs est satisfaisant mais il est nécessaire d'améliorer encore l'échange thermique entre le fluide réfrigérant et l'air à refroidir.

Ceci implique une meilleure homogénéité de la température du fluide réfrigérant entre les différentes régions (droite/gauche, haut/bas) de l'évaporateur, et donc une meilleure répartition des pertes de charge au sein des diverses régions de l'évaporateur.

Il existe ainsi un besoin pour un évaporateur présentant des performances améliorées pour l'échange thermique par rapport aux dispositifs connus

WO 2006/028296 A1, FR 2 986 312 A1 et WO 2009/022020 A1 divulguent des évaporateurs selon le préambule de la revendication 1.

### 3 RESUME

La présente invention a pour objet de résoudre ces problèmes de l'état de l'art en proposant un évaporateur notamment pour un circuit de climatisation de véhicule automobile, comprenant un empilement de plaques formant des tubes de circulation d'un fluide réfrigérant délimitant entre eux des passages d'air de manière à refroidir un flux d'air circulant par lesdits passages à travers l'évaporateur.

L'invention est définit dans la revendication 1.

Ainsi, l'invention propose une solution nouvelle et inventive pour améliorer les performances d'un évaporateur, utilisé par exemple dans un circuit de climatisation d'un véhicule automobile.

Pour ce faire, l'invention propose d'utiliser un empilement de tubes comprenant chacun d'un unique chemin de circulation du fluide réfrigérant regroupant le nombre total de passes de circulation par lequel le fluide réfrigérant doit passer, les passes étant ici mises en série dans un tube donné.

De la sorte, en alimentant en parallèle tous les tubes en question, les phénomènes de remélange (ou de redistribution) classiquement rencontrés dans les collecteurs des évaporateurs de l'art antérieur lors du passage du liquide réfrigérant d'une passe à l'autre via un tel collecteur sont ici réduits (une portion de fluide sortant d'une passe n'a pas le choix, pour la passe suivante, entre plusieurs tubulures).

De la sorte, les pertes de charge correspondantes au niveau des collecteurs sont ici rebasculées dans les tubes selon l'invention.

Le débit du fluide réfrigérant dans les différents tubes constituant l'évaporateur est ainsi homogénéisé, permettant par là-même une amélioration des performances globales de l'évaporateur.

Selon l'invention, ledit chemin de circulation d'au moins un desdits tubes comprend quatre passes de circulation dudit fluide réfrigérant. Selon l'invetion, ledit au moins un tube comprend trois plaques délimitant entre elles ledit chemin de circulation dudit fluide réfrigérant, ledit chemin de circulation incluant une première circulation en U suivant une direction orthogonale audit flux d'air à refroidir, ladite première circulation étant suivie d'une deuxième circulation en U suivant une direction parallèle audit flux d'air à refroidir, la deuxième circulation étant elle-même suivie d'une troisième circulation en U suivant une direction orthogonale audit flux d'air à refroidir et opposée à la direction de ladite première circulation.

Ainsi, l'alternance des sens de circulation du fluide réfrigérant dans des passes adjacentes (à la fois dans un tube donné et dans des tubes successifs de l'empilement) améliore l'homogénéité en température au niveau des surfaces d'échange thermique avec le flux d'air.
Selon un aspect particulier de l'invention, au moins une desdites trois plaques est une plaque emboutie présentant au moins une conduite et étant destinée à coopérer avec au moins une face d'une autre desdites trois plaques de manière à constituer au moins une portion dudit chemin de circulation dudit fluide réfrigérant.

Ainsi, la fabrication des tubes est simple et économique.

Selon un aspect particulier de l'invention, une desdites trois plaques est une plaque centrale corruguée disposée entre deux autres plaques parmi lesdites trois plaques.

Ainsi, l'échange de calorie est amélioré entre les différentes passes de circulation du fluide réfrigérant dans le tube en question.

Selon un aspect particulier de l'invention, lesdites trois plaques sont configurées pour délimiter un tronçon d'alimentation en fluide réfrigérant, un chemin d'alimentation en fluide réfrigérant résultant de la coopération de tronçons d'alimentation obtenus pour chaque tube dudit empilement, ledit chemin d'alimentation mettant en communication de fluide des orifices d'entrée desdits tubes dudit empilement avec ledit port d'entrée de fluide réfrigérant dudit évaporateur, et mettant en communication de fluide des orifices de sortie desdits tubes dudit empilement avec ledit port de sortie de fluide réfrigérant dudit évaporateur.

Ainsi, la jonction en communication de fluide des entrées et sorties des tubes est simple et économique.
Selon un aspect particulier de l'invention, les tubes dudit empilement sont empilés en alternance avec des ailettes intercalaires traversées par ledit flux d'air à refroidir.

Ainsi, l'échange de calories est amélioré entre le fluide réfrigérant et le flux d'air.

Selon un aspect particulier de l'invention, l'évaporateur présente une profondeur de 38mm.

Ainsi, l'évaporateur peut aisément être intégré au sein d'un boitier HVAC (pour « Heating, Ventilation and Air-Conditioning » en anglais) standard.

L'invention concerne également un circuit de climatisation comprend un évaporateur tel que décrit précédemment.

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 est un schéma représentant un circuit de climatisation dans lequel peut être mis en œuvre un évaporateur conforme à l'invention ;
- la figure 2 illustre un évaporateur à plaques ainsi qu'un exemple connu de circulation de fluide réfrigérant au sein de cet évaporateur ;
- la figure 3 est une vue schématique d'éléments constitutifs d'un empilement de tubes destiné à un évaporateur selon un mode de réalisation de la technique décrite ;
- la figure 4 est une vue schématique d'un chemin d'alimentation en fluide réfrigérant d'un empilement de tubes destiné à un évaporateur selon un mode de réalisation de la technique décrite.

### 5 DESCRIPTION DETAILLEE DE L'INVENTION

Sur toutes les figures du présent document, les éléments identiques sont désignés par une même référence.

Le principe général de l'invention consiste en un évaporateur du type à plaques comprenant un empilement de tubes plats délimitant entre eux des passages d'air de manière à refroidir un flux d'air circulant par les passages en question.

Au moins un tube de l'empilement, formé de plaques accolées, comprend un unique chemin de circulation du fluide réfrigérant entre un orifice d'entrée et un orifice de sortie, le chemin étant composé d'une pluralité de passes successives disposées en série.

Par ailleurs, l'orifice d'entrée du tube est en communication de fluide avec le port d'entrée de fluide de l'évaporateur, et l'orifice de sortie du tube est en communication de fluide avec le port de sortie de fluide de l'évaporateur.

Ainsi, toutes les passes de circulation par lesquelles une fraction donnée du fluide réfrigérant doit passer sont ici mises en série dans un tube donné.

Les différents tubes de l'empilement sont par ailleurs alimentés en parallèle.

Plus particulièrement, l'orifice d'entrée de chaque tube de l'empilement est en communication de fluide avec le port d'entrée de fluide de l'évaporateur, et l'orifice de sortie de chaque tube de l'empilement est en communication de fluide avec le port de sortie de fluide de l'évaporateur.

Les phénomènes de remélange rencontrés dans les collecteurs utilisés dans les évaporateurs de l'art antérieur sont ici réduits (selon la technique décrite, une portion de fluide sortant d'une passe n'a en effet plus le choix entre plusieurs passages pour la passe suivante).

Les pertes de charge correspondantes sont alors rebasculées dans les tubes.

Le débit du fluide réfrigérant dans les différents tubes constituant l'évaporateur est ainsi homogénéisé, permettant par là-même une amélioration des performances globales de l'évaporateur.

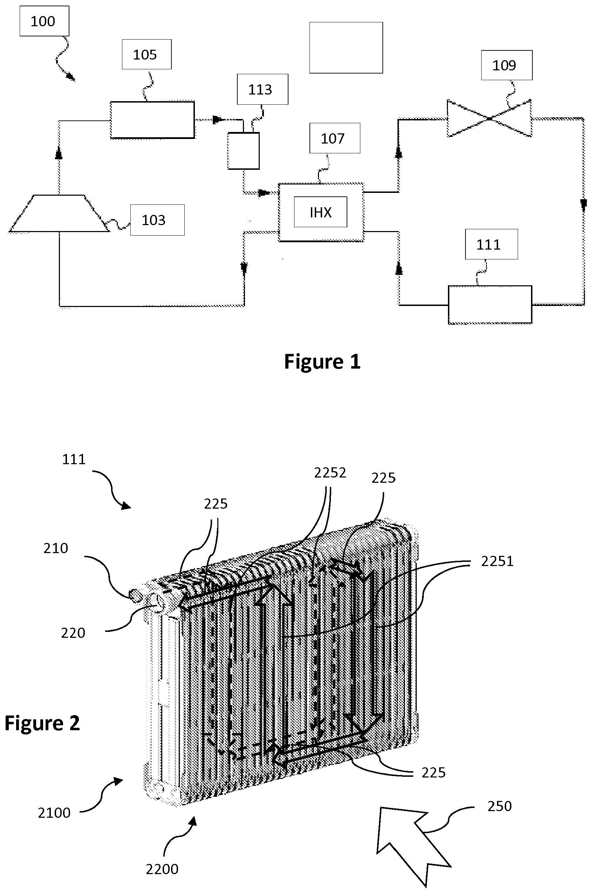

On décrit maintenant, en relation avec la figure 1, les éléments constitutifs d'un circuit de climatisation 100 classique, dans lequel peut être mis en œuvre un évaporateur conforme à l'invention.

Le circuit de climatisation 100 comprend un compresseur 103, un condenseur 105, un échangeur de chaleur interne 107, un détendeur 109, un évaporateur 111 et une bouteille dessicante 113, ces différents éléments étant reliés les uns aux autres par des pièces de jonction, tels que des tubulures, des tuyaux ou analogues, de manière à assurer une circulation de fluide réfrigérant.

Le fluide réfrigérant est typiquement un fluide chloré et fluoré fonctionnant dans un régime sous-critique, tel que le fluide R-134a, un mélange de HFO-1234yf et de CF31, ou tout autre fluide réfrigérant capable de fonctionner en régime sous-critique.

Sur la figure 1, des flèches illustrent la circulation du fluide réfrigérant. Le fluide réfrigérant, envoyé par le compresseur 103, traverse le condenseur 105, duquel il ressort dans un état de haute pression et de haute température. Le fluide réfrigérant traverse ensuite l'échangeur de chaleur interne 107 en empruntant un circuit de circulation interne dit haute pression, puis est détendu dans le détendeur 109. Le fluide ainsi détendu est ensuite acheminé vers l'évaporateur 111, avant de rejoindre l'échangeur de chaleur interne 107 dans un état de basse pression et de basse température, qu'il traverse en empruntant un circuit de circulation interne dit haute pression. La bouteille dessicante 113 est intercalée entre le condenseur 105 et l'échangeur de chaleur interne 107.

Dans l'échangeur de chaleur interne 107, le fluide réfrigérant à basse pression provenant de l'évaporateur 111 échange de la chaleur avec ce même fluide réfrigérant à haute pression provenant du condenseur 105.

À la sortie de l'échangeur de chaleur interne 107, le fluide gagne à nouveau le compresseur 103, et ainsi de suite.

On décrit maintenant, en relation avec la **figure 2**, la structure d'un évaporateur 111 à plaques ainsi qu'un exemple connu de circulation classique 4 passes de fluide réfrigérant au sein de l'évaporateur 111.

L'évaporateur 111 comprend un cœur d'évaporateur constitué de deux nappes 2100, 2200 adjacentes s'étendant dans des plans parallèles.

Chaque nappe est formée d'une pluralité de conduites parallèles réalisées à partir de paires de plaques accolées formant un tube. Un tel tube est parcouru par un fluide réfrigérant de manière à refroidir le flux d'air 250 traversant successivement les première et deuxième nappes 2100, 2200.

De façon connue, les plaques sont configurées de sorte à définir des moyens répartiteurs de fluide aux deux extrémités (supérieure et inférieure) des nappes 2100, 2200, qui assurent la distribution et la collecte du fluide réfrigérant dans les différentes conduites des nappes 2100, 2200, en définissant entre les moyens répartiteurs une circulation du fluide dans un sens donné pour chaque conduite.

L'évaporateur 111 présente un port d'entrée de fluide 210 permettant d'acheminer le fluide réfrigérant depuis l'extérieur de l'évaporateur 111 (par exemple depuis le détendeur 109) vers le cœur de l'évaporateur 111.

De même, un port de sortie de fluide 220 permet d'acheminer le fluide réfrigérant depuis le cœur de l'évaporateur 111 vers l'extérieur de l'évaporateur 111 (par exemple vers l'échangeur de chaleur interne 107).

Les plaques présentent des orifices à l'extrémité supérieure, les orifices étant bordés de collerettes de sorte à former un espace collecteur d'entrée relié à l'entrée de fluide 210 et un espace collecteur de sortie relié à la sortie de fluide 220 lorsque les plaques sont empilées.

Selon la configuration connue représentée, le fluide réfrigérant suit dans le cœur de l'évaporateur 111 un parcours constitué de deux passes par nappe (ici représentées par les flèches 2251 pour la première nappe 2200, c'est-à-dire celle disposée du côté du flux d'air 250 entrant à refroidir, et par les flèches 2252 pour la deuxième nappe 2100 située du côté du flux d'air refroidi).

En pratique, plusieurs conduites parallèles définissent autant de passages possibles dans une passe pour le fluide réfrigérant (c'est-à-dire qu'une des flèches 2251 ou 2252 représentant une passe est constituée de plusieurs conduites parallèles).

Le passage d'une passe à l'autre se fait alors classiquement via une boîte collectrice permettant le passage du fluide réfrigérant des conduites d'une passe vers les conduites d'une autre passe (passage ici représenté par les flèches 225).

Cependant, selon cette configuration connue, toutes les conduites se trouvant en parallèle pour une passe donnée débouchent dans la même boite collectrice afin d'alimenter la pluralité de conduites parallèles de la passe suivante.

Ceci conduit nécessairement à des pertes de charge lors du remélange du fluide réfrigérant dans la boîte collectrice (c'est-à-dire une fraction de fluide réfrigérant sortant d'une conduite donnée d'une passe amont se trouve devant la possibilité de passer par n'importe laquelle des conduites de la passe suivante. Ceci étant vrai pour toutes les fractions de fluide réfrigérant sortant des différentes conduites de la passe amont en question, un remélange se produit dans la boîte collectrice avant que les différents fractions de fluide réfrigérant n'entrent dans la pluralité de conduites parallèles de la passe suivante).

Un évaporateur selon l'invention présente la même structure que celle décrite en relation avec la figure 2.

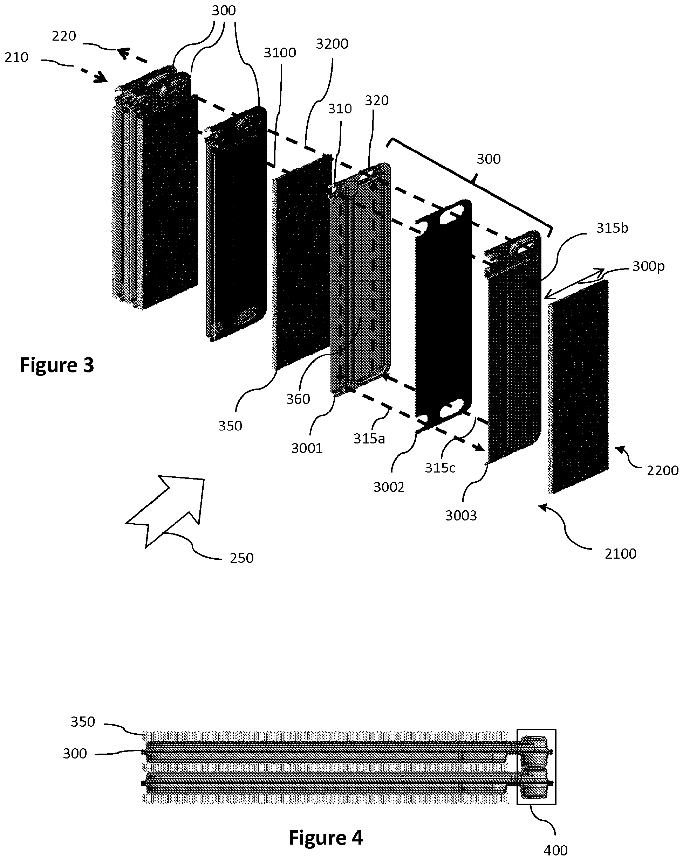

La **figure 3** illustre une partie d'un évaporateur conforme à l'invention. Ce dernier comprend un empilement de plaques formant des tubes 300 plats délimitant entre eux des passages d'air de manière à refroidir le flux d'air 250 circulant par les passages en question.

Selon ce mode de réalisation, un tube 300 de l'empilement comprend trois plaques 3001, 3002, 3003 (par exemple en aluminium) délimitant entre elles un unique chemin de circulation du fluide réfrigérant entre l'orifice d'entrée 310 du tube 300 et l'orifice de sortie 320 du tube 300, le chemin étant composé d'une pluralité de passes successives disposées en série.

L'orifice d'entrée 310 et l'orifice de sortie 320 du tube 300 sont situés à une même extrémité supérieure du tube 300. Les plaques 3001, 3002, 3003 sont percées de deux trous en leur extrémité supérieure, seule la plaque intercalaire/centrale 3002 étant percée de deux trous en son extrémité inférieure.

Par ailleurs, l'orifice d'entrée 310 du tube 300 est en communication de fluide avec le port d'entrée de fluide 210 de l'évaporateur via un chemin de circulation de fluide matérialisé par les flèches 3100 en pointillés. De même l'orifice de sortie 320 du tube 300 est en communication de fluide avec le port de sortie de fluide 220 de l'évaporateur via un chemin de circulation de fluide matérialisé par les flèches 3200 en pointillés.

Ainsi, toutes les passes de circulation par lequel le fluide réfrigérant doit passer sont ici disposées successivement en série dans un tube 300 donné.

Une pluralité de tels tubes 300 est alors alimentée en parallèle depuis le port d'entrée 210 de fluide de l'évaporateur 111 vers les orifices d'entrée 310 des tubes en question via le chemin de circulation de fluide matérialisé par les flèches 3100 en pointillés. Les orifices de sortie 320 des mêmes tubes sont tous reliés fluidiquement au port de sortie 220 de fluide de l'évaporateur 111 via le chemin de circulation de fluide matérialisé par les flèches 3200 en pointillés.

Les phénomènes de remélange (ou de redistribution) rencontrés avec les collecteurs utilisés dans les solutions connues comme décrits ci-dessus sont ici réduits.

De la sorte, les pertes de charge correspondantes sont rebasculées dans les tubes 300 grâce à l'invention.

Le débit du fluide réfrigérant dans les différents tubes 300 constituant l'évaporateur 111 est ainsi homogénéisé, permettant par là-même une amélioration des performances globales de l'évaporateur 111.

Les plaques forment un tube définissant un chemin de circulation du fluide réfrigérant qui comprend quatre passes, chaque passe étant définie par une conduite de circulation de fluide (on entend ici par « passe » le parcours du fluide réfrigérant dans une conduite d'une nappe 2100, 2200).

Plus particulièrement, le chemin de circulation du fluide réfrigérant inclut une première circulation en « U » (flèches en pointillés 315a) suivant une direction orthogonale au flux d'air 250. La première circulation en « U » est ensuite suivie d'une deuxième circulation en « U » (flèches en pointillés 315b) suivant une direction parallèle au flux d'air 250, la deuxième circulation étant elle-même suivie d'une troisième circulation en « U » (flèches en pointillés 315c) suivant une direction orthogonale au flux d'air 250 et opposée à la direction de la première circulation en « U ».

De la sorte, le chemin de circulation pour chaque tube comprend quatre passes de circulation du fluide réfrigérant, deux passes parmi les quatre appartenant à la première nappe 2100, et les deux autres passes parmi les quatre appartenant à la deuxième nappe 2200. De la sorte deux nappes et quatre passes sont regroupées au sein d'un même tube.

Un évaporateur 111 dit « quatre passes » et « deux nappes » est ainsi obtenu par un empilement de tels tubes 300 selon la technique décrite.

Par ailleurs, une alternance des sens de circulation du fluide réfrigérant dans des passes adjacentes (à la fois dans un tube 300 donné et dans des tubes 300 successifs de l'empilement) est obtenue. La température du tube est par ailleurs moyennée par conduction entre les plaques. L'homogénéité en température est par là-même améliorée au niveau des surfaces d'échange thermique avec le flux d'air 250.

Dans une variante, au moins une des trois plaques 3001, 3002, 3003 est une plaque emboutie présentant au moins une conduite 360.

Par ailleurs, la plaque en question est destinée à coopérer avec au moins une face d'une autre des trois plaques 3001, 3002, 3003 de manière à constituer au moins une portion du chemin de circulation du fluide réfrigérant.

De la sorte, la fabrication des tubes est simple et économique.

Dans une variante, la plaque centrale 3002 qui est disposée entre deux autres plaques 3001, 3003 parmi les trois plaques 3001, 3002, 3003 constituant le tube 300 est une plaque centrale corruguée.

Ainsi, l'échange de calories est amélioré entre les différentes passes de circulation du fluide réfrigérant dans le tube 300 en question.

Dans le mode de réalisation illustré sur la figure 3, les tubes 300 de l'empilement sont empilés en alternance avec des ailettes 350 intercalaires traversées par le flux d'air 250.

Ainsi, l'échange thermique est amélioré entre le fluide réfrigérant et le flux d'air.

Par ailleurs, la communication de fluide entre le port d'entrée 210 de fluide de l'évaporateur 111 et les orifices d'entrée 310 des tubes 300 de l'empilement, ainsi que la communication de fluide entre le port de sortie 220 de fluide de l'évaporateur 111 et les orifices de sortie 320 des mêmes tubes 300 se fait d'un même côté des tubes 300 (ici sur la partie supérieure). De la sorte, l'autre côté des tubes 300 (ici sur la partie inférieure) est laissé libre.

Les ailettes 350 peuvent ainsi être disposées jusqu'à l'extrémité de la partie laissée libre (donc ici jusqu'à l'extrémité de la partie inférieure) des tubes 300, permettant par là-même d'améliorer l'échange thermique entre le fluide réfrigérant et le flux d'air 250 incident.

Dans le mode de réalisation illustré sur la figure 3, les tubes 300 utilisés sont tous identiques.

Ainsi, l'évaporateur 111 est obtenu de manière modulaire et différentes longueurs peuvent être envisagées en fonction du nombre de tubes 300 empilés.

De la sorte, plusieurs gammes d'évaporateurs peuvent être adressées sur la base des mêmes tubes 300 élémentaires, simplifiant par là-même le processus de fabrication industriel de tels évaporateurs 111.

On décrit maintenant, en relation avec la **figure 4****,** un chemin d'alimentation 400 en fluide réfrigérant d'un empilement de tubes 300 destiné à un évaporateur 111 selon un mode de réalisation de la technique décrite.

Selon ce mode de réalisation, les trois plaques 3001, 3002, 3003 constituant le tube 300 sont configurées pour délimiter un tronçon d'alimentation du tube 300 en fluide réfrigérant, par exemple via des sections cylindriques s'étendant perpendiculairement au plan des plaques extérieures 3001, 3003 depuis les entrée 310 et sortie 320 du tube 300.

De la sorte, un chemin d'alimentation 400 en fluide réfrigérant est obtenu via la coopération (e.g. par emboîtement, sertissage, brasage, etc.) des tronçons d'alimentation de chaque tube 300 de l'empilement lors de l'assemblage entre eux des tubes 300 afin de former l'empilement en question.

Plus particulièrement, le chemin d'alimentation 400 ainsi obtenu met en communication de fluide les orifices d'entrée 310 des tubes de l'empilement avec l'entrée de fluide 210 de l'évaporateur, et les orifices de sortie 320 des tubes de l'empilement avec la sortie de fluide 220 de l'évaporateur.

De la sorte, la jonction en communication de fluide des entrées et sorties des tubes 300 est simple et économique.

Dans un mode de réalisation, l'évaporateur 111 a une profondeur 300p de 38mm dans une direction perpendiculaire au sens d'empilement des tubes 300.

Ainsi, il est possible d'intégrer un tel échangeur évaporateur 111 au sein d'un boitier HVAC standard, sans modification substantielle de ce dernier.

L'utilisation d'un évaporateur 111 selon la technique décrite dans un circuit de climatisation 100 intégré à un véhicule automobile permet d'améliorer l'efficacité de la climatisation et donc du confort dans l'habitacle du véhicule.

## Revendications

1. Evaporateur (111) notamment pour un circuit de climatisation (100) de véhicule automobile, comprenant un empilement de plaques formant des tubes (300) de circulation d'un fluide réfrigérant délimitant entre eux des passages d'air de manière à refroidir un flux d'air (250) circulant par lesdits passages à travers l'évaporateur (111), tel qu'au moins un desdits tubes (300) comprend un unique chemin de circulation (315a, 315b, 315c) dudit fluide réfrigérant entre un orifice d'entrée (310) et un orifice de sortie (320), ledit chemin circulation (315a, 315b, 315c) étant composé d'une pluralité de passes successives,
ledit orifice d'entrée (310) dudit au moins un tube (300) étant en communication de fluide avec un port d'entrée de fluide réfrigérant (210) dudit évaporateur (111), et ledit orifice de sortie (320) dudit au moins un tube (300) étant en communication de fluide avec un port de sortie de fluide réfrigérant (220) dudit évaporateur (111),
dans lequel ledit chemin de circulation (315a, 315b, 315c) d'au moins un desdits tubes (300) comprend quatre passes de circulation dudit fluide réfrigérant **caractérisé en ce que** ledit au moins un tube (300) comprend trois plaques (3001, 3002, 3003) délimitant entre elles ledit chemin de circulation (315a, 315b, 315c) dudit fluide réfrigérant,
ledit chemin de circulation (315a, 315b, 315c) incluant une première circulation en U suivant une direction orthogonale audit flux d'air (250) à refroidir,
ladite première circulation étant suivie d'une deuxième circulation en U suivant une direction parallèle audit flux d'air (250) à refroidir,
la deuxième circulation étant elle-même suivie d'une troisième circulation en U suivant une direction orthogonale audit flux d'air (250) à refroidir et opposée à la direction de ladite première circulation.

2. Evaporateur (111) selon la revendication 1, **caractérisé en ce qu'**au moins une desdites trois plaques (3001, 3002, 3003) est une plaque emboutie présentant au moins une conduite (360) et étant destinée à coopérer avec au moins une face d'une autre desdites trois plaques (3001, 3002, 3003) de manière à constituer au moins une portion dudit chemin de circulation dudit fluide réfrigérant.

3. Evaporateur (111) selon la revendication 1 ou 2, caractérisé en qu'une desdites trois plaques (3001, 3002, 3003) est une plaque centrale corruguée disposée entre deux autres plaques parmi lesdites trois plaques.

4. Evaporateur (111) selon l'une quelconque des revendications 1 à 3, caractérisé en que lesdites trois plaques (3001, 3002, 3003) sont configurées pour délimiter un tronçon d'alimentation en fluide réfrigérant,
un chemin d'alimentation (400) en fluide réfrigérant résultant de la coopération de tronçons d'alimentation obtenus pour chaque tube (300) dudit empilement,
ledit chemin d'alimentation (400) mettant en communication de fluide des orifices d'entrée (310) desdits tubes (300) dudit empilement avec ledit port d'entrée de fluide réfrigérant (210) dudit évaporateur (111), et mettant en communication de fluide des orifices de sortie (320) desdits tubes dudit empilement avec ledit port de sortie de fluide réfrigérant (220) dudit évaporateur (111).

5. Evaporateur (111) selon l'une quelconque des revendications 1 à 4, **caractérisé en ce que** les tubes (300) dudit empilement sont empilés en alternance avec des ailettes (350) intercalaires traversées par ledit flux d'air à refroidir.

6. Evaporateur (111) selon l'une quelconque des revendications 1 à 5, **caractérisé en ce qu'**il présente une profondeur (300p) de 38mm.

7. Circuit de climatisation **caractérisé en ce qu'**il comprend un évaporateur (111) selon l'une quelconque des revendications 1 à 6.

## Patentansprüche

1. Verdampfer (111), insbesondere für einen Klimatisierungskreislauf (100) eines Kraftfahrzeugs, welcher einen Stapel von Platten umfasst, die Rohre (300) zur Zirkulation eines Kältemittels zu bilden, die zwischen sich Luftdurchlässe begrenzen, um so einen Luftstrom (250) zu kühlen, der durch diese Durchlässe durch den Verdampfer (111) strömt, derart, dass wenigstens eines der Rohre (300) einen einzigen Strömungsweg (315a, 315b, 315c) des Kältemittels zwischen einer Eintrittsöffnung (310) und einer Austrittsöffnung (320) umfasst, wobei der Strömungsweg (315a, 315b, 315c) aus mehreren aufeinander folgenden Durchgängen besteht,
wobei die Eintrittsöffnung (310) des wenigstens einen Rohres (300) mit einem Kältemittel-Eintrittsanschluss (210) des Verdampfers (111) in Fluidverbindung steht und die Austrittsöffnung (320) des wenigstens einen Rohres (300) mit einem Kältemittel-Austrittsanschluss (220) des Verdampfers (111) in Fluidverbindung steht,
wobei der Strömungsweg (315a, 315b, 315c) wenigstens eines der Rohre (300) vier Strömungsdurchgänge des Kältemittels umfasst, **dadurch gekennzeichnet, dass** das wenigstens eine Rohr (300) drei Platten (3001, 3002, 3003) umfasst, die zwischen sich den Strömungsweg (315a, 315b, 315c) des Kältemittels begrenzen,
wobei der Strömungsweg (315a, 315b, 315c) eine erste U-förmige Strömung in einer Richtung aufweist, die zu dem zu kühlenden Luftstrom (250) orthogonal ist,
wobei auf die erste Strömung eine zweite U-förmige Strömung in einer Richtung folgt, die zu dem zu kühlenden Luftstrom (250) parallel ist,
wobei auf die zweite Strömung wiederum eine dritte U-förmige Strömung in einer Richtung folgt, die zu dem zu kühlenden Luftstrom (250) orthogonal ist und zur Richtung der ersten Strömung entgegengesetzt ist.

2. Verdampfer (111) nach Anspruch 1, **dadurch gekennzeichnet, dass** wenigstens eine der drei Platten (3001, 3002, 3003) eine ausgebauchte Platte ist, die wenigstens ein Leitungsrohr (360) aufweist und dazu bestimmt ist, mit wenigstens einer Seite einer anderen der drei Platten (3001, 3002, 3003) zusammenzuwirken, derart, dass wenigstens ein Abschnitt des Strömungsweges des Kältemittels gebildet wird.

3. Verdampfer (111) nach Anspruch 1 oder 2, **dadurch gekennzeichnet, dass** eine der drei Platten (3001, 3002, 3003) eine gewellte mittlere Platte ist, die zwischen zwei anderen Platten von den drei Platten angeordnet ist.

4. Verdampfer (111) nach einem der Ansprüche 1 bis 3, **dadurch gekennzeichnet, dass** die drei Platten (3001, 3002, 3003) dafür ausgelegt sind, einen Zuführungsabschnitt des Kältemittels zu begrenzen, wobei ein Zuführungsweg (400) des Kältemittels aus dem Zusammenwirken von Zuführungsabschnitten resultiert, die für jedes Rohr (300) des Stapels erhalten wurden,
wobei der Zuführungsweg (400) eine Fluidverbindung der Eintrittsöffnungen (310) der Rohre (300) des Stapels mit dem Kältemittel-Eintrittsanschluss (210) des Verdampfers (111) herstellt und eine Fluidverbindung der Austrittsöffnungen (320) der Rohre des Stapels mit dem Kältemittel-Austrittsanschluss (220) des Verdampfers (111) herstellt.

5. Verdampfer (111) nach einem der Ansprüche 1 bis 4, **dadurch gekennzeichnet, dass** die Rohre (300) des Stapels abwechselnd mit Abstandsrippen (350) gestapelt sind, die von dem zu kühlenden Luftstrom durchquert werden.

6. Verdampfer (111) nach einem der Ansprüche 1 bis 5, **dadurch gekennzeichnet, dass** er eine Tiefe (300p) von 38 mm aufweist.

7. Klimatisierungskreislauf, **dadurch gekennzeichnet, dass** er einen Verdampfer (111) nach einem der Ansprüche 1 bis 6 umfasst.

## Claims

1. Evaporator (111), in particular for a motor vehicle air-conditioning circuit (100), comprising a stack of plates forming tubes (300) for circulating a fluid refrigerant that between them delimit air passages so as to cool a stream of air (250) circulating via said passages across the evaporator (111), such that at least one of said tubes (300) comprises a single circulation path (315a, 315b, 315c) for said fluid refrigerant between an inlet orifice (310) and an outlet orifice (320), said circulation path (315a, 315b, 315c) being composed of a plurality of successive passes,
said inlet orifice (310) of said at least one tube (300) being in fluidic communication with a fluid refrigerant inlet portion (210) of said evaporator (111), and said outlet orifice (320) of said at least one tube (300) being in fluidic communication with a fluid refrigerant outlet portion (220) of said evaporator (111),
wherein said circulation path (315a, 315b, 315c) of at least one of said tubes (300) comprises four circulation passes for said fluid refrigerant, **characterized in that** said at least one tube (300) comprises three plates (3001, 3002, 3003) delimiting between them said circulation path (315a, 315b, 315c) for said fluid refrigerant,
said circulation path (315a, 315b, 315c) including a first U-circulation in a direction orthogonal to said stream of air (250) to be cooled,
said first circulation being followed by a second U-circulation in a direction parallel to said stream of air (250) to be cooled,
the second circulation itself being followed by a third U-circulation in a direction orthogonal to said stream of air (250) to be cooled and opposite to the direction of said first circulation.

2. Evaporator (111) according to Claim 1, **characterized in that** at least one of said three plates (3001, 3002, 3003) is a stamped plate having at least one duct (360) and being intended to cooperate with at least one face of another of said three plates (3001, 3002, 3003) so as to constitute at least one portion of said circulation path for said fluid refrigerant.

3. Evaporator (111) according to Claim 1 or 2, **characterized in that** one of said three plates (3001, 3002, 3002) is a corrugated central plate arranged between two other plates among said three plates.

4. Evaporator (111) according to any one of Claims 1 to 3, **characterized in that** said three plates (3001, 3002, 3003) are configured to delimit a fluid refrigerant supply section,
a fluid refrigerant supply path (400) resulting from the cooperation of supply sections obtained for each tube (300) of said stack,
said supply path (400) establishing fluidic communication between the inlet orifices (310) of said tubes (300) of said stack and said refrigerant fluid inlet portion (210) of said evaporator (111), and establishing fluidic communication between the outlet orifices (320) of said tubes of said stack and said fluid refrigerant outlet portion (220) of said evaporator (111).

5. Evaporator (111) according to any one of Claims 1 to 4, **characterized in that** the tubes (300) of said stack are alternately stacked with interposed fins (350) traversed by said stream of air to be cooled.

6. Evaporator (111) according to any one of Claims 1 to 5, **characterized in that** it has a depth (300p) of 38 mm.

7. Air-conditioning circuit, **characterized in that** it comprises an evaporator (111) according to any one of Claims 1 to 6.
